# EUROPÄISCHE PATENTSCHRIFT

(11) **EP 3 589 864 B1**
(45) Veröffentlichungstag und Bekanntmachung des Hinweises auf die Patenterteilung: **09.06.2021**
(21) Anmeldenummer: 18702116.7
(22) Anmeldetag: 15.01.2018
(51) Int. Cl.: F16H 57/04

(54) **ANTRIEBSVORRICHTUNG UND KRAFTFAHRZEUG MIT EINER ANTRIEBSVORRICHTUNG**
DRIVE DEVICE AND MOTOR VEHICLE HAVING A DRIVE DEVICE
MÉCANISME D'ENTRAÎNEMENT ET VÉHICULE À MOTEUR ÉQUIPÉ D'UN MÉCANISME D'ENTRAÎNEMENT

(30) Priorität: 03.03.2017 DE 102017203541
(43) Veröffentlichungstag der Anmeldung: 08.01.2020
(73) Patentinhaber: Audi AG, 85045 Ingolstadt (DE)
(72) Erfinder: SCHOLLE, Tassilo, 85080 Gaimersheim (DE)
(86) Internationale Anmeldenummer: PCT/EP2018/050846
(87) Internationale Veröffentlichungsnummer: WO 2018/157985

(56) Entgegenhaltungen:
- EP-A1- 1 750 965
- WO-A1-2008/025691
- WO-A1-2013/018201
- DE-T5-112013 000 340
- US-A1- 2014 231 174

## Beschreibung

Die Erfindung betrifft eine Antriebsvorrichtung für ein Kraftfahrzeug, mit wenigstens einer Antriebsmaschine und mit wenigstens einem Schaltgetriebe. Das Schaltgetriebe kann beispielsweise als Automatikgetriebe oder als Handschaltgetriebe ausgestaltet sein. Ein weiterer Aspekt der Erfindung betrifft ein Kraftfahrzeug mit einer derartigen Antriebsvorrichtung.

Die DE 10 2015 213 109 A1 offenbart eine Drehmomentübertragungsvorrichtung mit einem Planetengetriebe. Das Planetengetriebe weist Planetenräder, ein erstes Hohlrad und/oder ein erstes Sonnenrad sowie ein zweites Hohlrad und/oder ein zweites Sonnenrad auf. Das erste Planetenrad kämmt mit dem ersten Hohlrad und/oder dem ersten Sonnenrad und das zweite Planetenrad kämmt mit dem zweiten Hohlrad und/oder dem zweiten Sonnenrad. Ferner sind das erste und das zweite Planetenrad axial beabstandet zueinander auf einer Planetenwelle angeordnet und jeweils mit dieser drehverbindbar oder drehverbunden, wobei die Planetenwelle derart gelagert ist, dass die Planetenräder in einer Position festgelegt sind. Das Planetengetriebe weist des Weiteren eine Doppelkupplungsvorrichtung auf, welche als trocken oder als nass ausgeführte Doppelkupplungsvorrichtung ausgebildet sein kann.

Die DE 10 2014 201 254 A1 offenbart eine Getriebeanordnung und einen Antriebsstrang für ein Hybridfahrzeug sowie ein entsprechendes Hybridfahrzeug. Die Getriebeanordnung umfasst dabei eine mit einer Eingangswelle verbundene elektrische Maschine, eine mit einem Verbrennungsmotor verbindbare Verbrennungsmotor-Eingangswelle, eine Ausgangswelle sowie einen Ravigneaux-Planetenradsatz, dessen Steg mittels einer Bremse an einem Getriebegehäuse festlegbar ist. Die Getriebeanordnung zeichnet sich durch eine schaltbare Kupplungsanordnung aus, mittels welcher der Steg und eine zweite Sonne des Ravigneaux-Planetenradsatzes sowie die Verbrennungsmotor-Eingangswelle selektiv miteinander drehmomentübertragend koppelbar sind. Weiterhin weist die Getriebeanordnung eine Hilfswelle auf, welche die Getriebeanordnung als koaxiale Zentralwelle in ihrer Länge durchsetzt. Die Hilfswelle steht einerseits mit der Bremse und andererseits mit der schaltbaren Kupplungsanordnung in Wechselwirkung.

Die WO 2013/018201 A1 offenbart eine Hybridantriebsvorrichtung die so konfiguriert ist, dass sowohl das Reibungselement einer Kupplung als auch der Rotor einer dynamoelektrischen Maschine effizient gekühlt werden. Eine Hybridantriebsvorrichtung umfasst eine Kupplung, die zwischen einer ersten Welle und einer zweiten Welle, einer dynamoelektrischen Maschine und einem Gehäuse vorgesehen ist.

Die DE 11 2013 000 340 T5 offenbart, dass wenn eine Kupplung vollständig in Eingriff kommt, wird Schmiermittel eines Automatikgetriebes gesichert und eine große Schmiermittelmenge zu der Kupplung in einer Rutschsteuerung der Kupplung zu dem Zeitpunkt eines Anfahrens zugeführt. Eine Eingangsöffnung und eine Ausgangsöffnung eines Schmiermittelvorsteuerventils stehen miteinander in Verbindung, um einen regulierten Druck eines Sekundär drucköldurchgangs zu einem Kupplungsschmiermittel-durchgang zu dem Zeitpunkt einer Rutschsteuerung der Kupplung zuzuführen und stehen zu dem Zeitpunkt einer Nicht-Rutschsteuerung mit dem Kupplungsschmiermitteldurchgang über eine Engstelle (kommunizierend) in Verbindung.

Die US 2014/231174 A1 offenbart eine Fahrzeugantriebsvorrichtung mit einer rotierenden elektrischen Maschine, einem Geschwindigkeitsänderungsmechanismus und einem Gehäuse, das den Drehzahländerungsmechanismus der rotierenden elektrischen Maschine aufnimmt. Ein erster Ölspeicherabschnitt ist vorgesehen, um mit dem Geschwindigkeitsänderungsmechanismus zu kommunizieren, der Platz aufnimmt.

Die EP 1 750 965 A1 offenbart ein Kraftübertragungselement, wobei die Auswahlmittel zwei Fluideingänge, wo von ein erster Eingang mit dem Vorratsbehälter verbunden ist und der zweite Eingang mit dem Rückführungskanal verbunden ist, und einen Fluidausgang, der mit der Pumpe verbunden ist, aufweist

Der gattungsgemäße Stand der Technik der WO 2008/025691 A1 offenbart eine Hybridantriebseinheit für ein Kraftfahrzeug zum Einbau zwischen einem Verbrennungsmotor und einem Fahrzeuggetriebe, welche eine elektrische Maschine mit einem Rotor und einem Stator aufweist und als Motor oder Generator betreibbar ist. Radial innerhalb der elektrischen Maschine ist mindestens eine schaltbare Kupplung angeordnet und das Fahrzeuggetriebe weist eine Getriebeeingangswelle und ein Getriebegehäuse auf.

Derartige Bremsen werden bei Abbremsen von Getriebeelementen, also beispielsweise von Getriebewellen, in besonderem Maße thermisch belastet.

Aufgabe der vorliegenden Erfindung ist es, eine Antriebsvorrichtung sowie ein Kraftfahrzeug der eingangs genannten Art bereitzustellen, welche unter einem besonders geringen Aufwand gekühlt werden können. Diese Aufgabe wird durch eine Antriebsvorrichtung mit den Merkmalen des Patentanspruchs 1, sowie durch ein Kraftfahrzeug gemäß Patentanspruch 8 gelöst. Vorteilhafte Weiterbildungen der Erfindung sind durch die Unteransprüche gegeben.

Die Erfindung geht von einer Antriebsvorrichtung für ein Kraftfahrzeug, mit wenigstens einer Antriebsmaschine und mit wenigstens einem Schaltgetriebe aus. Die Antriebsmaschine kann vorzugsweise eine E-Maschine sein. Das Schaltgetriebe dient zum Übersetzen von Antriebsdrehmoment, mittels welchem das Kraftfahrzeug angetrieben werden kann. Mittels des Schaltgetriebes können also verschiedene Übersetzungsverhältnisse eingestellt werden. Mit anderen Worten kann bei dem Schaltgetriebe zwischen verschiedenen Gängen geschaltet werden.

Die Antriebsvorrichtung weist wenigstens ein Kühlsystem auf, welches dazu ausgebildet ist, die wenigstens eine Antriebsmaschine und das wenigstens eine Schaltgetriebe zumindest bereichsweise mit einem Kühlmedium zu beaufschlagen. Mittels des Kühlsystems ist also eine Kühlung sowohl der Antriebsmaschine als auch des Schaltgetriebes möglich, wodurch für die Antriebsmaschine und das Schaltgetriebe keine voneinander separaten Kühlvorrichtungen vorgesehen werden müssen und dementsprechend eine Kühlung unter besonders geringem Aufwand erfolgen kann. Das Kühlsystem kann beispielsweise zumindest einen Wärmetauscher zum Abführen von Wärme an die Umgebung, mehrere Kühlkanäle, welche sich zumindest bereichsweise durch die Antriebsmaschine und das Schaltgetriebe erstrecken, sowie zumindest eine Pumpe zum Fördern des Kühlmediums durch die Kühlkanäle aufweisen. Die Kühlkanäle können beispielsweise als Ringkanäle ausgebildet sein und sich über jeweilige Gehäusebereiche der Antriebsmaschine und des Schaltgetriebes erstrecken. Ein besonderer Vorteil besteht darin, dass durch die Kühlung des Schaltgetriebes mittels des Kühlsystems zumindest bereichsweise auf eine Kühlung von Getriebekomponenten durch in dem Schaltgetriebe enthaltenes Getriebeöl verzichtet werden kann, wodurch etwaige Planschverluste reduziert werden können.

Unter dem Begriff "Beaufschlagen" ist im Rahmen der Erfindung ein Befeuchten und damit ein Benetzen oder Durchströmen des Schaltgetriebes und der Antriebsmaschine mit dem Kühlmedium zu verstehen.

Das Kühlsystem umfasst wenigstens eine Getriebekühlkanalanordnung, welche sich zumindest bereichsweise durch ein Getriebegehäuse des Schaltgetriebes erstreckt sowie wenigstens eine Maschinenkühlkanalanordnung, welche sich zumindest bereichsweise durch ein Maschinengehäuse der Antriebsmaschine erstreckt. Dies ist von Vorteil, da durch derartige Kühlkanalanordnungen im Getriebegehäuse bzw. Maschinengehäuse eine besonders bedarfsgerechte Kühlung ermöglicht ist. Die Getriebekühlkanalanordnung bzw. die Maschinenkühlkanalanordnung können jeweilige Kühlkanäle umfassen, welche sich sowohl in Axialerstreckungsrichtung des Getriebegehäuses bzw. des Maschinengehäuses als auch in Umfangsrichtung des Getriebegehäuses bzw. des Maschinengehäuses erstrecken können. Dadurch ist eine besonders gleichmäßige, zumindest bereichsweise Kühlung des Schaltgetriebes bzw. der Antriebsmaschine ermöglicht.

Die Getriebekühlkanalanordnung und die Maschinenkühlkanalanordnung können zu einem geschlossenen Kühlkreislauf verbunden sein. Hierzu kann die Maschinenkühlkanalanordnung beispielsweise Überströmkanäle aufweisen, über welche die Maschinenkühlkanalanordnung fluidisch mit der Getriebekühlkanalanordnung verbunden sein kann. Dadurch ist eine Kühlung des Schaltgetriebes und der Antriebsmaschine unter besonders geringem Aufwand ermöglicht, da lediglich eine Pumpe ausreicht, um das Kühlmedium sowohl durch die Getriebekühlkanalanordnung als auch durch die Maschinenkühlkanalanordnung zu fördern. Die Pumpe kann beispielsweise in die Antriebsmaschine integriert sein. Die Pumpe und die Maschinenkühlkanalanordnung ermöglichen eine eigenständige Kühlung der Antriebsmaschine, indem das Kühlmedium relativ zu dem Maschinengehäuse bewegt und dabei beispielsweise in Umfangsrichtung gefördert wird. Durch die Verbindung zwischen der Maschinenkühlkanalanordnung und der Getriebekühlkanalanordnung wird das Kühlmedium beim Betrieb der Pumpe sowohl durch die Antriebsmaschine als auch durch das Schaltgetriebe gefördert um somit neben der Antriebsmaschine auch das Schaltgetriebe zu kühlen.

In einer weiteren vorteilhaften Weiterbildung der Erfindung weist die Getriebekühlkanalanordnung wenigstens zwei Kühlkanalöffnungen auf, mittels welchen die Getriebekühlkanalanordnung fluidisch mit der Maschinenkühlkanalanordnung gekoppelt ist. Dies ist von Vorteil, da mittels der wenigstens zwei Kühlkanalöffnungen sowohl ein Medieneintritt und damit ein Zufluss, als auch ein Medienaustritt und damit ein Abfluss des Kühlmediums von der Maschinenkühlkanalanordnung in die Getriebekühlkanalanordnung bzw. aus der Getriebekühlkanalanordnung in die Maschinenkühlkanalanordnung ermöglicht ist.

Das Schaltgetriebe weist wenigstens eine Schalteinheit zum Einstellen wenigstens eines Übersetzungsverhältnisses des Schaltgetriebes auf, wobei die wenigstens eine Schalteinheit zumindest bereichsweise kontaktwärmeleitend mit der Getriebekühlkanalanordnung koppelbar und/oder gekoppelt ist. Dies ist von Vorteil, da durch eine Kontaktwärmeleitung eine unmittelbare Beaufschlagung der Schalteinheit mit dem Kühlmedium unterbunden und damit beispielsweise ein Planschen der Schalteinheit in dem Kühlmedium vermieden werden kann. Die Schalteinheit kann bereichsweise mit dem Getriebegehäuse in Eingriff stehen, wodurch dementsprechend die Schalteinheit auch bereichsweise kontaktwärmeleitend mit der Getriebekühlkanalanordnung gekoppelt ist. Eine Wärmeübertragung kann dann beispielsweise unter Vermittlung einer, die Getriebekühlkanalanordnung von der Schalteinheit trennende Kühlkanalwand erfolgen. Die Kühlkanalwand kann Teil des Getriebegehäuses des Schaltgetriebes sein. Zusätzlich oder alternativ kann die Schalteinheit auch zumindest bereichsweise kontaktwärmeleitend mit der Getriebekühlkanalanordnung koppelbar sein. Dies ist beispielsweise dann der Fall, wenn die Schalteinheit in einem aktivierten Zustand in Kontakt mit dem Getriebegehäuse steht, jedoch in einem deaktivierten Zustand ein Luftspalt zwischen der Schalteinheit und dem Getriebegehäuse vorhanden sein kann. Die Schalteinheit kann vollständig in einem durch das Getriebegehäuse gegenüber einer Umgebung des Schaltgetriebes begrenzten Gehäuseinnenraum aufgenommen sein.

In einer weiteren vorteilhaften Weiterbildung der Erfindung weist die wenigstens eine Schalteinheit zumindest ein Schaltelement auf, welches zumindest bereichsweise in einer Ausnehmung des Getriebegehäuses aufgenommen und kontaktwärmeleitend mit der Getriebekühlkanalanordnung gekoppelt ist. Dies ist von Vorteil, da durch das Anordnen in der Ausnehmung ein besonders großflächiger Kontakt zwischen dem Schaltelement und dem Getriebegehäuse und damit eine besonders effiziente Wärmeleitung zwischen der Schalteinheit bzw. dessen Schaltelement und der Getriebekühlkanalanordnung ermöglicht ist. Das Schaltelement kann beispielsweise als Scheibe ausgebildet sein, welche formschlüssig mit einer Getriebewelle (Innenscheibe) oder dem Getriebegehäuse (Außenscheibe) verbunden sein kann.

In einer weiteren vorteilhaften Weiterbildung der Erfindung ist die wenigstens eine Schalteinheit als Bremse, insbesondere als trockene Bremse, ausgebildet. Dies ist von Vorteil, da mittels einer derartigen Bremse ein besonders verzögerungsfreies Schalten zwischen verschiedenen Übersetzungsverhältnissen ermöglicht ist. Ist die Bremse als trockene Bremse, welche auch als Trockenbremse bezeichnet werden kann, ausgebildet, so kann diese ohne Kühlung durch Getriebeöl betrieben werden, wodurch etwaige Planschverluste vermieden werden können. Trockenbremsen sind zudem deutlich weniger aufwendig gestaltet, als sogenannte Nassbremsen, welche unter Beaufschlagung durch Getriebeöl gekühlt werden und dementsprechend aufgrund von Planscheffekten im Vergleich zu trockenen Bremsen unter entsprechend höheren Verlusten betrieben werden können. Das Kühlsystem ermöglicht eine Erhöhung der Lebensdauer der trockenen Bremse, wobei beispielsweise Reibbeläge der trockenen Bremse aufgrund der Kühlung mittels des Kühlsystems weniger verschleißbehaftet sind. Durch die Kühlung mittels des Kühlsystems kann die Bremse insgesamt besonders klein und kompakt ausgestaltet werden, da durch die Kühlung eine insgesamt geringere thermische Belastung der Bremse bei deren Betrieb auftritt. Ist die Bremse als trockene Bremse ausgebildet, so können hydraulische Maßnahmen zur Beölung und Kühlung der Bremse entfallen, wodurch insgesamt weniger Getriebeöl im Schaltgetriebe mitgeführt werden muss.

In einer weiteren vorteilhaften Weiterbildung der Erfindung umfasst das Schaltgetriebe die Antriebsmaschine. Mit anderen Worten kann also die Antriebsmaschine Teil des Schaltgetriebes sein. Dies ist von besonderem Vorteil, da somit durch das Schaltgetriebe und die Antriebsmaschine beispielsweise eine Anfahren des Kraftfahrzeugs aus dem Stand möglich ist, ohne dabei auf weitere Antriebsmotoren, wie beispielsweise eine Verbrennungskraftmaschine des Kraftfahrzeugs zurückgreifen zu müssen. Die Antriebsmaschine kann in einem Gehäuseinnenraum des Schaltgetriebes aufgenommen sein und somit durch das Getriebegehäuse des Schaltgetriebes von einer Umgebung des Schaltgetriebes abgegrenzt sein.

In einer weiteren vorteilhaften Weiterbildung ist die Antriebsmaschine drehmomentübertragend mit wenigstens einem Übersetzungselement des Schaltgetriebes gekoppelt. Dies ist von Vorteil, da hierdurch weitere Freiheitsgrade bei der Einstellung von etwaigen Übersetzungsverhältnissen des Schaltgetriebes gegeben sind. Das wenigstens eine Übersetzungselement kann von einer Getriebeeingangswelle und einer Getriebeausgangswelle des Schaltgetriebes verschieden sein. Die Antriebsmaschine kann eine Antriebswelle aufweisen, welche mit dem wenigstens einen Übersetzungselement gekoppelt sein kann. Hierzu kann beispielsweise ein mit der Antriebswelle der Antriebsmaschine verbundenes Antriebsritzel mit dem, beispielsweise als Zahnrad ausgebildeten Übersetzungselement in Eingriff stehen.

In einer weiteren vorteilhaften Weiterbildung der Erfindung ist die Antriebsmaschine eine elektrische Maschine. Dies ist von Vorteil, da durch die elektrische Maschine ein besonders hohes Antriebsdrehmoment auch bei stillstehender Antriebswelle der elektrischen Maschine bereitgestellt werden kann. Die Antriebsmaschine kann als Elektromotor und als Generator betrieben werden, um eine Rekuperation von Energie zu ermöglichen.

Ein weiterer Aspekt der Erfindung betrifft ein Kraftfahrzeug mit einer erfindungsgemäßen Antriebsvorrichtung. Bei einem derartigen Kraftfahrzeug ist eine Kühlung unter besonders geringem Aufwand ermöglicht, da sowohl die Antriebsmaschine als auch das Schaltgetriebe mittels des Kühlsystems gekühlt werden können. Die im Zusammenhang mit der erfindungsgemäßen Antriebsvorrichtung vorgestellten Merkmale sowie deren Vorteile gelten entsprechend für das erfindungsgemäße Kraftfahrzeug und umgekehrt.

Zu der Erfindung gehören auch Weiterbildungen des erfindungsgemäßen Kraftfahrzeugs, die Merkmale aufweisen, wie sie bereits im Zusammenhang mit den Weiterbildungen der erfindungsgemäßen Antriebsvorrichtung beschrieben worden sind. Aus diesem Grund sind die entsprechenden Weiterbildungen des erfindungsgemäßen Kraftfahrzeugs hier nicht noch einmal beschrieben.

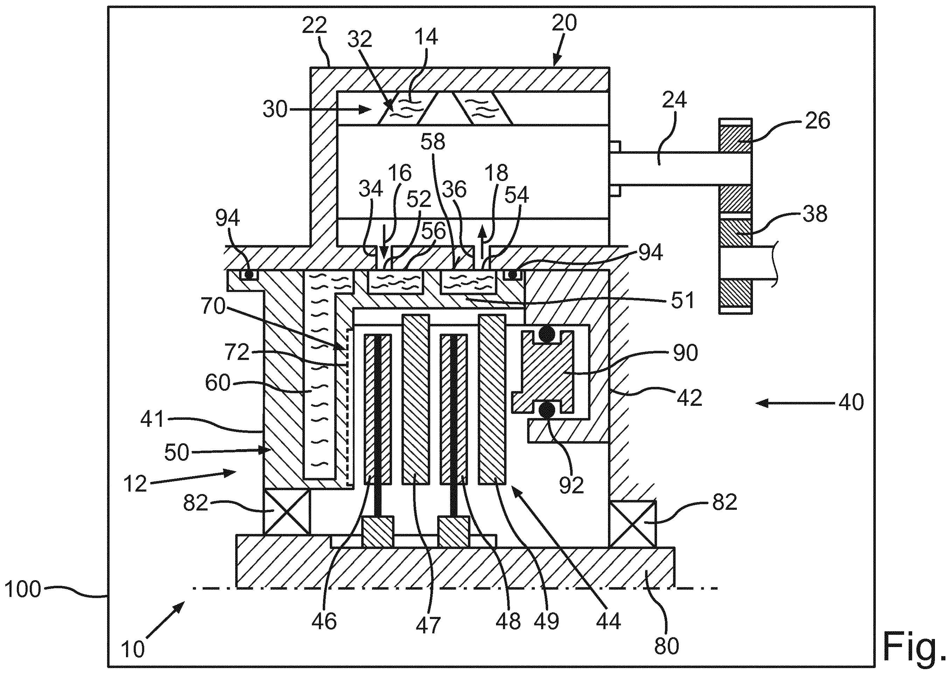

Im Folgenden sind Ausführungsbeispiele der Erfindung beschrieben. Hierzu zeigt die einzige Fig. einen Halbschnitt eines Teilbereichs einer Antriebsvorrichtung, welche in einem Kraftfahrzeug angeordnet ist.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

Die Fig. zeigt ein schematisch dargestelltes Kraftfahrzeug 100 mit einer Antriebsvorrichtung 10. Von der Antriebsvorrichtung 10 ist vorliegend nur ein Teilbereich gezeigt und in einer Schnittansicht dargestellt.

Die Antriebsvorrichtung 10 weist eine Antriebsmaschine 20 und ein Schaltgetriebe 40 auf. Die Antriebsmaschine 20 ist dabei in das Schaltgetriebe 40 integriert. Mit anderen Worten umfasst das Schaltgetriebe 40 die Antriebsmaschine 20. Die Antriebsmaschine 20 ist vorliegend drehmomentübertragend mit einem Übersetzungselement 38 des Schaltgetriebes 40 gekoppelt. Das Übersetzungselement 38 kann, wie vorliegend gezeigt, beispielsweise einem Zahnrad des Schaltgetriebes 40 entsprechen und dementsprechend von einer Getriebeeingangswelle und einer Getriebeausgangswelle (hier nicht gezeigt) des Schaltgetriebes 40 verschieden sein. Die Antriebsmaschine 20 ist vorliegend als elektrische Maschine ausgebildet und ermöglicht durch deren drehmomentübertragende Kopplung mit dem Übersetzungselement 38 ein Anfahren und damit ein Bewegen des Kraftfahrzeugs 100 aus dessen Stillstand heraus. Weitere Antriebsmotoren, also beispielsweise eine hier nicht weiter dargestellte Verbrennungskraftmaschine des Kraftfahrzeugs 100, können somit während des Anfahrens des Kraftfahrzeugs 100 mittels der Antriebsmaschine 20 ausgeschaltet (deaktiviert) bleiben. Die Antriebsmaschine 20 kann, wie vorliegend gezeigt, eine Antriebswelle 24 umfassen, welche unter Vermittlung eines Antriebsritzels 26 mit dem Übersetzungselement 38 in Eingriff stehen kann.

Die Antriebsvorrichtung 10 weist ein Kühlsystem 12 auf, welches dazu ausgebildet ist die Antriebsmaschine 20 und das Schaltgetriebe 40 bereichsweise mit einem Kühlmedium 14 zu beaufschlagen. Das Kühlmedium 14 kann Wasser oder beispielsweise Kühlwasser (Wasser-Glykol-Mischung) sein. Zur Kühlung kann das Kühlsystem 12 einen hier nicht weiter gezeigten Wärmetauscher, welcher auch als Wärmeübertrager bezeichnet werden kann, aufweisen. Um das Kühlmedium 14 zu fördern kann das Kühlsystem 12 eine Pumpe aufweisen, welche vorliegend ebenfalls nicht dargestellt ist.

Das Kühlsystem 12 weist eine Getriebekühlkanalanordnung 50 auf, welche sich zumindest bereichsweise durch ein Getriebegehäuse 42 des Schaltgetriebes 40 erstreckt. Des Weiteren weist das Kühlsystem 12 eine Maschinenkühlkanalanordnung 30 auf, welche sich zumindest bereichsweise durch ein Maschinengehäuse 22 der Antriebsmaschine 20 erstreckt. Die Maschinenkühlkanalanordnung 30 kann zumindest einen Maschinenkühlkanal 32 aufweisen, welcher sich beispielsweise spiralförmig in Umfangsrichtung des Maschinengehäuse 22 und in diesem erstrecken kann. Die Getriebekühlkanalanordnung 50 weist vorliegend zwei Kühlkanalöffnungen 52, 54 auf, mittels welchen die Getriebekühlkanalanordnung 50 fluidisch mit der Maschinenkühlkanalanordnung 30 gekoppelt ist. Hierzu weist die Maschinenkühlkanalanordnung 30 einen ersten Überströmkanal 34 sowie einen zweiten Überströmkanal 36 auf. Der erste Überströmkanal 34 ist im vorliegenden Ausführungsbeispiel mit der ersten Kühlkanalöffnung 52 fluidleitend verbunden, wohingegen der zweite Überströmkanal 36 mit der zweiten Kühlkanalöffnung 54 fluidleitend verbunden ist.

Die erste Kühlkanalöffnung 52 ist dabei als Zufluss ausgebildet, über welchen ein durch einen Pfeil verdeutlichter Medieneintritt 16 des Kühlmediums 14 von der Maschinenkühlkanalanordnung 30 in die Getriebekühlkanalanordnung 50 erfolgen kann. Die zweite Kühlkanalöffnung 54 ist vorliegend als Abfluss ausgebildet, über welchen ein vorliegend ebenfalls durch einen Pfeil verdeutlichter Medienaustritt 18 von der Getriebekühlkanalanordnung 50 in die Maschinenkühlkanalanordnung 30 erfolgen kann.

Das Maschinengehäuse 22 ist mit dem Getriebegehäuse 42 an einem gemeinsamen Kontaktbereich verbunden. An dem Kontaktbereich ist zumindest eine Mediendichtung 94 vorgesehen, welche ein Austreten des Kühlmediums 14 an die Umgebung verhindert.

Das Schaltgetriebe 40 weist wenigstens eine Schalteinheit 44 zum Einstellen zumindest eines Übersetzungsverhältnisses des Schaltgetriebes 40 auf. Die Schalteinheit 44 ist vorliegend als trockene Bremse ausgebildet und kontaktwärmeleitend mit einem, mit der ersten Kühlkanalöffnungen 52 gekoppelten Radialkühlkanal 56 sowie mit einem mit der zweiten Kühlkanalöffnung 54 fluidisch gekoppelten Radialkühlkanal 58 gekoppelt. Die beiden Radialkühlkanäle 56, 58 führen das Kühlmedium 14 zumindest bereichsweise in Umfangsrichtung um die Schalteinheit 44 herum wodurch die Schalteinheit 44 in deren radialer Erstreckungsrichtung durch das Kühlmedium 14, insbesondere durch Wärmeübertragung in Form von Wärmeleitung gekühlt wird. Die Wärmeleitung erfolgt dabei vorliegend über eine Kühlkanalwand 51 in einem (gehäusefesten) Außenträger des Getriebegehäuses 42 an welcher eine Mittelscheibe 47 sowie eine Außenscheibe 49 der Schalteinheit 44 formschlüssig eingreifen. Die Getriebekühlkanalanordnung 50 erstreckt sich auch über einen Gehäuseabschnitt 41 des Getriebegehäuses 42, in welchem ein Axialkühlkanal 60 zur Kühlung der Schalteinheit 44 in dem Gehäuseabschnitt 41 vorgesehen ist. Der Axialkühlkanal 60 weist, wie in der Schnittdarstellung erkennbar ist, einen L-förmig umlaufenden (Rotations-)Querschnitt auf, ist fluidisch mit zumindest einem der Radialkühlkanäle 56, 58 verbunden (hier nicht gezeigt) und führt das Kühlmedium 14 zumindest bereichsweise in axialer Erstreckungsrichtung der Schalteinheit 44 in einem Abstand zu einer Innenscheibe 46 der Schalteinheit 44 zumindest bereichsweise an dieser entlang. Der Axialkühlkanal 60 ist dabei vorzugsweise in radialer Erstreckungsrichtung der Schalteinheit 44 auf Höhe der ersten Innenscheibe 46 und zumindest bereichsweise in dem Gehäuseabschnitt 41 umlaufend angeordnet. Dadurch ist eine besonders gezielte Kühlung von in der radialen Erstreckungsrichtung auf Höhe der ersten Innenscheibe 46 angeordneten (hier nicht näher bezeichneten) Reibbelägen der Schalteinheit 44 gegeben.

Die Schalteinheit 44 (Bremse) umfasst neben der ersten Innenscheibe 46 auch eine zweite Innenscheibe 48. Die Innenscheiben 46, 48 stehen vorliegend mit einer Getriebewelle 80 des Schaltgetriebes 40 in Eingriff. Die Getriebewelle 80 ist über jeweilige Wellenlager 82 an dem Getriebegehäuse 42 gelagert. Um die Getriebewelle 80 gegenüber dem Getriebegehäuse 42 abzustützen und damit eine Relativdrehung der Getriebewelle 80 zu dem Getriebegehäuse 42 zu unterbinden, ist ein hydraulisch bewegbarer Betätigungskolben 90 vorgesehen, mittels welchem die Schalteinheit 44 aktivierbar und deaktivierbar ist. Der Betätigungskolben 90 ist über eine Kolbendichtung 92 dichtend in dem Getriebegehäuse 42 aufgenommen.

Im aktivierten Zustand übt der Betätigungskolben 90 eine Anpresskraft auf die Scheiben 46, 47, 48, 49 aus, wodurch zwischen der Mittelscheibe 47, der Außenscheibe 49 und den Innenscheiben 46, 48 ein Reibschluss an den jeweiligen Reibbelägen entsteht und die Getriebewelle 80 an dem Getriebegehäuse 42 festgehalten und damit abgestützt wird. Durch die Anpresskraft wird die Innenscheibe 46, welche auch als Schaltelement der Schalteinheit 44 bezeichnet werden kann, an den Gehäuseabschnitt 41 gepresst, wodurch eine Kontaktwärmeleitung zwischen dem Axialkühlkanal 60 und der Innenscheibe 46 erfolgt. Die Kontaktwärmeleitung erfolgt dabei unter Vermittlung einer Wandung 72 des Gehäuseabschnitts 41. Die Wandung 72 trennt den Axialkühlkanal 60 von der Innenscheibe 46 (Schaltelement). Ist die Schalteinheit 44 in deren deaktiviertem Zustand, in welchem der Betätigungskolben 90 keine Anpresskraft auf die Scheiben 46, 47, 48, 49 ausübt, so kann eine Kontaktwärmeleitung zwischen der Getriebekühlkanalanordnung 50 bzw. deren Axialkühlkanal 60 und der Innenscheibe 46 unterbunden sein. In dem Gehäuseabschnitt 41 kann auch eine Ausnehmung 70 vorgesehen sein, in welcher die Innenscheibe 46 (Schaltelement) aufgenommen und dadurch kontaktwärmeleitend mit dem Axialkühlkanal 60 der Getriebekühlkanalanordnung 50 gekoppelt sein kann. Die Ausnehmung 70 gestattet eine besonders effiziente Kühlung der Innenscheibe 46. Dies ist dadurch ermöglicht, dass die Ausnehmung 70 die Innenscheibe 46 bereichsweise umschließt, wenn der Betätigungskolben 90 (beim Aktivieren der Schalteinheit 44) die Scheiben 46, 47, 48, 49 aneinander drückt und dabei die Innenscheibe 46 in die Ausnehmung 70 und an die Wandung 72 presst.

Insgesamt zeigen die Beispiele, wie durch die vorliegende Erfindung eine effektive Kühlung auch für trockene Bremsen des Schaltgetriebes 40, welches beispielsweise als Automatikgetriebe ausgebildet sein kann, ermöglicht ist. Die Leistungsfähigkeit der trockenen, gehäusefesten Schaltelemente (Scheiben 47, 49) kann durch aktive Kühlung mittels des Kühlsystems 12 optimiert werden. Dadurch können die vorhandenen Potenziale des Schaltgetriebes 40, welches die Antriebsmaschine 20 umfassen kann, besonders wirksam genutzt werden. Die Kühlung mittels des Kühlsystems 12 ermöglicht eine Erschließung von zusätzlichem Bauraum im Schaltgetriebe 40 durch Umsetzung kompakter Bauweisen der Schaltelemente (Scheiben 46, 47, 48, 49). Durch die aktive Kühlung der am Getriebegehäuse 42 festgelegten Scheiben (Scheiben 47, 49) kann die Belastbarkeit (Momentenkapazität) der gesamten Schalteinheit 44 deutlich gesteigert werden, da eine, für die Werkstoffe und jeweiligen Scheiben 46, 47, 48, 49 ertragbare Betriebstemperatur, welche bei einer Relativbewegung zwischen den Scheiben 46, 47, 48, 49 infolge des Ausübens der Anpresskraft entsteht, gesenkt werden kann. Diese Betriebstemperatur, welche bei der kraftschlüssigen Verbindung der einzelnen Scheiben 46, 47, 48, 49 auftritt, stellt eine entscheidende Auslegungsgröße für die Schalteinheit 44 dar. Durch die wirksame Senkung der Betriebstemperatur mittels des Kühlsystems 12 kann dementsprechend eine Auslegung der Schalteinheit 44 dahingehend positiv beeinflusst werden, dass die Schalteinheit 44 besonders kompakt ausgebildet werden kann. So können beispielsweise die jeweiligen Reibbeläge kleiner dimensioniert werden, als dies ohne Kühlung durch das Kühlsystem 12 möglich wäre.

Des Weiteren kann mittels der aktiven Kühlung durch das Kühlsystem 12 eine Temperaturabstrahlung von der Schalteinheit 44 auf benachbarte Getriebekomponenten verringert werden.

Die Schalteinheit 44 kann, wie vorliegend gezeigt, allgemein als Mehrscheibentrockenbremse oder als Einscheibentrockenbremse ausgestaltet sein.

Während bei aus dem Stand der Technik bekannten Automatikgetrieben meist nasse Lamellenkupplungen und nasse Bremsen eingesetzt werden, um eine kraftschlüssige Verbindung von Getriebebauteilen zu ermöglichen, kann durch die vorliegende Erfindung auf trockene Schalteinheiten zum Schalten jeweiliger Gänge des Schaltgetriebes 40, also zum Einstellen verschiedener Übersetzungsverhältnisse, zurückgegriffen werden. Bei Kupplungen laufen allgemein die einzelnen Kupplungselemente mit jeweiligen, mit den Kupplungen verbundenen Getriebewellen um, wohingegen bei Bremsen einzelne Bremselemente gehäusefest angeordnet sind. Bei aus dem Stand der Technik bekannten Getrieben sind die Kupplungen bzw. Bremsen ölumspült, was für deren Funktion und die Kühlung der Reibbeläge bei nassen Kupplungen und nassen Bremsen dringend erforderlich ist.

Die Erfindung ermöglicht allgemein die Verwendung trockener Bremsen in dem Schaltgetriebe 40, da die Betriebstemperatur der trockenen Bremse (Schalteinheit 44) mittels des Kühlsystems 12 wirksam gesenkt werden kann. Das Kühlsystem 12 ermöglicht eine Kühlung jeweiliger Reibkontaktstellen im Bereich der Reibbeläge zwischen den einzelnen Scheiben 46, 47, 48, 49 bzw. der an der Temperaturerzeugung der Betriebstemperatur beteiligten Komponenten der Schalteinheit 44 durch das Kühlmedium 14.

Das Schaltgetriebe 40 kann als elektrifiziertes Getriebe ausgestaltet sein, indem die Antriebsmaschine 20 als elektrische Maschine ausgebildet und in das Schaltgetriebe 40 integriert ist. Die Maschinenkühlkanalanordnung 30 kann an einem gehäusefesten Stator der elektrischen Maschine (Antriebsmaschine 20) angeordnet sein, wobei die Maschinenkühlkanalanordnung 30 wasserdurchströmte Ringkanäle in einem Außenbereich einer Statoraufnahme bzw. eines Kühlmantels der Antriebsmaschine 20 aufweisen kann. Das Kühlmedium 14 kann Wasser oder eine Wasser-Glykol-Mischung sein, um nur einige Beispiele zu nennen.

Die vorliegende Erfindung ermöglicht eine gemeinsame Kühlung der Antriebsmaschine 20 und zumindest der mit dem Getriebegehäuse 42 in Eingriff stehenden Scheiben 47, 49 der Schalteinheit 44. Die Maschinenkühlkanalanordnung 30 und die Getriebekühlkanalanordnung 50 können allgemein auch gleichartige Ringkanäle zum Führen des Kühlmediums 14 aufweisen, welche in das Getriebegehäuse 42 bzw. in das Maschinengehäuse 22 eingelassen sein können.

## Patentansprüche

1. Antriebsvorrichtung (10) für ein Kraftfahrzeug (100), mit wenigstens einer Antriebsmaschine (20) und mit wenigstens einem Schaltgetriebe (40), wobei die Antriebsvorrichtung (10) wenigstens ein Kühlsystem (12) aufweist, welches dazu ausgebildet ist, die wenigstens eine Antriebsmaschine (20) und das wenigstens eine Schaltgetriebe (40) zumindest bereichsweise mit einem Kühlmedium (14) zu beaufschlagen, wobei das Kühlsystem (12) wenigstens eine Getriebekühlkanalanordnung (50), welche sich zumindest bereichsweise durch ein Getriebegehäuse (42) des Schaltgetriebes (40) erstreckt, sowie wenigstens eine Maschinenkühlkanalanordnung (30), welche sich zumindest bereichsweise durch ein Maschinengehäuse (22) der Antriebsmaschine (20) erstreckt, umfasst, wobei das Schaltgetriebe (40) wenigstens eine Schalteinheit (44) zum Einstellen wenigstens eines Übersetzungsverhältnisses des Schaltgetriebes (40) aufweist,
**dadurch gekennzeichnet, dass**
die wenigstens eine Schalteinheit (44) zumindest bereichsweise kontaktwärmeleitend mit der Getriebekühlkanalanordnung (50) gekoppelt ist, wobei die Getriebekühlkanalanordnung (50) von der Schalteinheit (44) durch eine wärmeübertragende Kühlkanalwand (51) getrennt ist, wodurch eine unmittelbare Beaufschlagung der Schalteinheit (44) mit dem Kühlmedium (14) unterbunden ist.

2. Antriebsvorrichtung (10) nach Anspruch 1,
**dadurch gekennzeichnet, dass**
die Getriebekühlkanalanordnung (50) wenigstens zwei Kühlkanalöffnungen (52, 54) aufweist, mittels welchen die Getriebekühlkanalanordnung (50) fluidisch mit der Maschinenkühlkanalanordnung (30) gekoppelt ist.

3. Antriebsvorrichtung (10) nach Anspruch 1 oder 2,
**dadurch gekennzeichnet, dass**
die wenigstens eine Schalteinheit (44) zumindest ein Schaltelement (46) aufweist, welches zumindest bereichsweise in einer Ausnehmung (70) des Getriebegehäuses (42) aufgenommen und kontaktwärmeleitend mit der Getriebekühlkanalanordnung (50) gekoppelt ist.

4. Antriebsvorrichtung (10) nach einem der vorhergehenden Ansprüche,
**dadurch gekennzeichnet, dass**
die wenigstens eine Schalteinheit (44) als Bremse, insbesondere als trockene Bremse, ausgebildet ist.

5. Antriebsvorrichtung (10) nach einem der vorhergehenden Ansprüche,
**dadurch gekennzeichnet, dass**
das Schaltgetriebe (40) die Antriebsmaschine (20) umfasst.

6. Antriebsvorrichtung (10) nach einem der vorhergehenden Ansprüche,
**dadurch gekennzeichnet, dass**
die Antriebsmaschine (20) drehmomentübertragend mit wenigstens einem Übersetzungselement (38) des Schaltgetriebes (40) gekoppelt ist.

7. Antriebsvorrichtung (10) nach einem der vorhergehenden Ansprüche,
**dadurch gekennzeichnet, dass**
die Antriebsmaschine (20) eine elektrische Maschine ist.

8. Kraftfahrzeug (100) mit einer Antriebsvorrichtung (10) nach einem der vorhergehenden Ansprüche.

## Claims

1. Drive device (10) for a motor vehicle (100), having at least one drive engine (20) and having at least one manual transmission (40), wherein the drive device (10) has at least one cooling system (12) which is configured to supply a cooling medium (14) to the at least one drive engine (20) and the at least one manual transmission (40) at least in some areas, wherein the cooling system (12) comprises at least one transmission cooling duct arrangement (50) which extends at least in some areas through a transmission housing (42) of the manual transmission (40), as well as at least one engine cooling duct arrangement (30) which extends at least in some areas through an engine housing (22) of the drive engine (20), wherein the manual transmission (40) has at least one shifting unit (44) for setting at least one translation ratio of the manual transmission (40),
**characterised in that**
the at least one shifting unit (44) is coupled at least in some areas with the transmission cooling duct arrangement (50) so as to conduct contact heat, wherein the transmission cooling duct arrangement (50) is separated from the shifting unit (44) by a heat-transferring cooling duct wall (51), as a result of which it is prevented that the cooling medium (14) is directly supplied to the shifting unit (44).

2. Drive device (10) according to claim 1,
**characterised in that**
the transmission cooling duct arrangement (50) has at least two cooling duct openings (52, 54), by means of which the transmission cooling duct arrangement (50) is coupled fluidically with the engine cooling duct arrangement (30).

3. Drive device (10) according to claim 1 or 2,
**characterised in that**
the at least one shifting unit (44) has at least one shifting element (46) which is accommodated at least in some areas in a recess (70) of the transmission housing (42) and is coupled with the transmission cooling duct arrangement (50) so as to conduct contact heat.

4. Drive device (10) according to any of the preceding claims,
**characterised in that**
the at least one shifting unit (44) is in the form of a brake, in particular a dry brake.

5. Drive device (10) according to any of the preceding claims,
**characterised in that**
the manual transmission (40) includes the drive engine (20).

6. Drive device (10) according to any of the preceding claims,
**characterised in that**
the drive engine (20) is coupled in a torque-transmitting manner with at least one translation element (38) of the manual transmission (40).

7. Drive device (10) according to any of the preceding claims,
**characterised in that**
the drive engine (20) is an electric engine.

8. Motor vehicle (100) having a drive device (10) according to any of the preceding claims.

## Revendications

1. Dispositif d'entraînement (10) pour un véhicule automobile (100), avec au moins une machine d'entraînement (20) et avec au moins une boîte de vitesses (40), dans lequel le dispositif d'entraînement (10) présente au moins un système de refroidissement (12) qui est réalisé afin d'alimenter l'au moins une machine d'entraînement (20) et l'au moins une boîte de vitesses (40) au moins par endroits avec un agent de refroidissement (14), dans lequel le système de refroidissement (12) comporte au moins un agencement de canal de refroidissement de boîte (50) qui s'étend au moins par endroits à travers un carter de boîte (42) de la boîte de vitesses (40), ainsi qu'au moins un agencement de canal de refroidissement de machine (30) qui s'étend au moins par endroits à travers un carter de machine (22) de la machine d'entraînement (20), dans lequel la boîte de vitesses (40) présente au moins une unité de commutation (44) pour le réglage au moins d'un rapport de transmission de la boîte de vitesses (40),
**caractérisé en ce que**
l'au moins une unité de commutation (44) est couplée au moins par endroits par conduction thermique de contact à l'agencement de canal de refroidissement de boîte (50), dans lequel l'agencement de canal de refroidissement de boîte (50) est séparé de l'unité de commutation (44) par une paroi de canal de refroidissement (51) de manière à transmettre la chaleur, par quoi une alimentation directe de l'unité de commutation (44) avec l'agent de refroidissement (14) est empêchée.

2. Dispositif d'entraînement (10) selon la revendication 1,
**caractérisé en ce que**
l'agencement de canal de refroidissement de boîte (50) présente au moins deux ouvertures de canal de refroidissement (52, 54), au moyen desquelles l'agencement de canal de refroidissement de boîte (50) est couplé par voie fluidique à l'agencement de canal de refroidissement de machine (30).

3. Dispositif d'entraînement (10) selon la revendication 1 ou 2,
**caractérisé en ce que**
l'au moins une unité de commutation (44) présente au moins un élément de commutation (46) qui est reçu au moins par endroits dans un évidement (70) du carter de boîte (42) et est couplé par conduction thermique de contact à l'agencement de canal de refroidissement de boîte (50).

4. Dispositif d'entraînement (10) selon l'une quelconque des revendications précédentes,
**caractérisé en ce que**
l'au moins une unité de commutation (44) est réalisée comme frein, en particulier comme frein sec.

5. Dispositif d'entraînement (10) selon l'une quelconque des revendications précédentes,
**caractérisé en ce que**
la boîte de vitesses (40) comporte la machine d'entraînement (20).

6. Dispositif d'entraînement (10) selon l'une quelconque des revendications précédentes,
**caractérisé en ce que**
la machine d'entraînement (20) est couplée par transmission de couple à au moins un élément de transmission (38) de la boîte de vitesses (40).

7. Dispositif d'entraînement (10) selon l'une quelconque des revendications précédentes,
**caractérisé en ce que**
la machine d'entraînement (20) est une machine électrique.

8. Véhicule automobile (100) avec un dispositif d'entraînement (10) selon l'une quelconque des revendications précédentes.
